# EUROPEAN PATENT SPECIFICATION

(11) **EP 3 715 682 B1**
(45) Date of publication and mention of the grant of the patent: **17.05.2023**
(21) Application number: 20166418.2
(22) Date of filing: 27.03.2020
(51) Int. Cl.: F16K 11/052, F16K 11/16, F24F 13/14, F16K 31/52

(54) **VALVE FOR AN AIR COOLING MACHINE**
VENTIL FÜR EINE LUFTKÜHLMASCHINE
SOUPAPE POUR UNE MACHINE DE REFROIDISSEMENT D'AIR

(30) Priority: 28.03.2019 CZ 20190189
(43) Date of publication of application: 30.09.2020
(73) Proprietor: Mirai Intex Sagl, 6830 Chiasso (CH)
(72) Inventor: Tsyplakov, Vladyslav, 1290 Versoix (CH)
(74) Representative: Musil, Dobroslav

(56) References cited:
- FR-A1- 3 053 103
- JP-U- S5 079 234
- US-A- 1 937 597
- US-A1- 2014 248 832

## Description

### Technical field

The invention relates to a valve for an air cooling machine, comprising a closed hollow body which is divided by at least one closable separating partition into an inlet portion of the air from the air cooling machine to a cooling chamber, which comprises an inlet opening for supplying air from the air cooling machine to the cavity of the valve body and a closable outlet opening for discharging from the cavity of the valve body to the cooling chamber, and an outlet portion of the air from the cooling chamber to the air cooling machine, which comprises a closable inlet opening for supplying air from the cooling chamber to the valve body and an outlet opening for discharging air from the valve body into the air cooling machine, the hollow body comprises two separating partitions provided with closable openings, whereby the first partition defines an air inlet portion from the air cooling machine to the cooling chamber and the second partition defines an air outlet portion from the cooling chamber to the air cooling machine, whereby between the first closable opening of the first partition and the outlet opening from the cavity of the valve body to the cooling chamber, a first shut-off flap is displaceably mounted, and between the second closable opening of the second partition and the inlet opening for supplying air from the cooling chamber to the cavity of the valve body, a second shut-off flap is displaceably mounted, the first shut-off flap and the second shut-off flap being rotatably mounted in the valve body and coupled to a drive disposed therebetween.

### Background art

RU 2410591 C2 discloses a low temperature shut-off device for a cryogenic environment, which comprises a body in which a valve seat is formed on which abuts a shut-off flap arranged rotatably in the body. At least one flange, designed as a welding flange, is provided on the body for fastening the low temperature shut-off device into the pipeline by means of a welded joint, particularly a contact welded joint. An opening is provided in the body for mounting and/or dismounting the shut-off flap.

The disadvantage is insufficient compensation of temperature deformations of the flap and the resulting unreliability of function during temperature changes. For a technical solution applicable in an air cooling machine, at least three shut-off devices according to RU 241059 would have to be used, which would increase costs and reduce the reliability of the solution.

Patent RU 2413110 discloses a hermetic shut-off valve for use especially in building ventilation systems. The valve comprises a cylindrical body in which a disc is rotatably mounted, which is hinged to a double-arm lever. The central part of the lever is connected to the disc by an axis by means of a web fixedly mounted on the central part of the disc. At least one spring is arranged between the lever and the disc, whereby one end of the spring is mounted on the disc near its circumferential portion and the other end of the spring is mounted on the lever on the side opposite the web. The lever is fixedly mounted on a shaft. The geometric axis of the shaft is offset from the axis of the lever-to-disk connection horizontally and from the geometric axis of the disk vertically so that in a side view, the shaft is disposed between the axis of the lever-to-disk connection and the spring-to-lever anchor point.

This valve is not capable of operating at low temperatures, for example -60 °C, and when temperature changes occur, and moreover, at least three valves would be necessary for using in an air cooling machine.

RU 2067263 discloses a flow switch, especially for the construction of ventilation systems, comprising a rectangular body with inlet and outlet mouths. Arranged in the body is a damper flap, which is connected by one edge by means of a lever at one of the mouths. The flap has a drive mounted on an axis with a means for securing its position, characterized in that the flap is flexible/resilient, whereby the drive is provided with a frame arranged in the body and anchored on one side by a hinge to the other edge of the lever and from the other side by its half-axes to the body and to the axis of rotation of the drive, the axis of rotation of the drive being located at a distance from the flap joint mounted in the body.

The drawback of the above-mentioned flow switch is the lack of means to compensate for thermal deformations and to ensure the airtightness of the flap when operating over a wide temperature range.

Document FR 3053103A1 discloses a valve according to the preamble of claim 1.

The object of the present invention to provide a valve which will allow the air flow to be switched between the cooling chamber and the air cooling machine by means of a single drive capable of operating at low temperatures. In addition, the valve should be simple in design, airtight and inexpensive.

### Principle of the invention

The object of the invention is achieved by a valve for an air cooling machine which comprises a hollow valve body which is by at least one closable separating partition divided into an inlet and outlet portion for air from the cooling chamber into the air cooling machine, whereby the principle of the invention is defined by the features of patent claim 1.

The valve allows closing the passage of the cooling air through the cooling chamber during removing snow and ice from a dehumidifier in the cooling chamber. During the closure, the air passes through the valve from the inlet opening for supplying air from the cooling machine to the outlet opening for discharging air into the cooling machine.

According to the invention, the shut-off flaps are coupled to the drive by means of tow bars with equalizing springs, whereby one end of the tow bar is mounted on the respective flap and the other end is mounted on a link which is fixedly mounted on the drive shaft.

To ensure the tightness of the valve, the closable openings are provided with valve seats on which the respective flaps are tightly seated.

### Description of the drawings

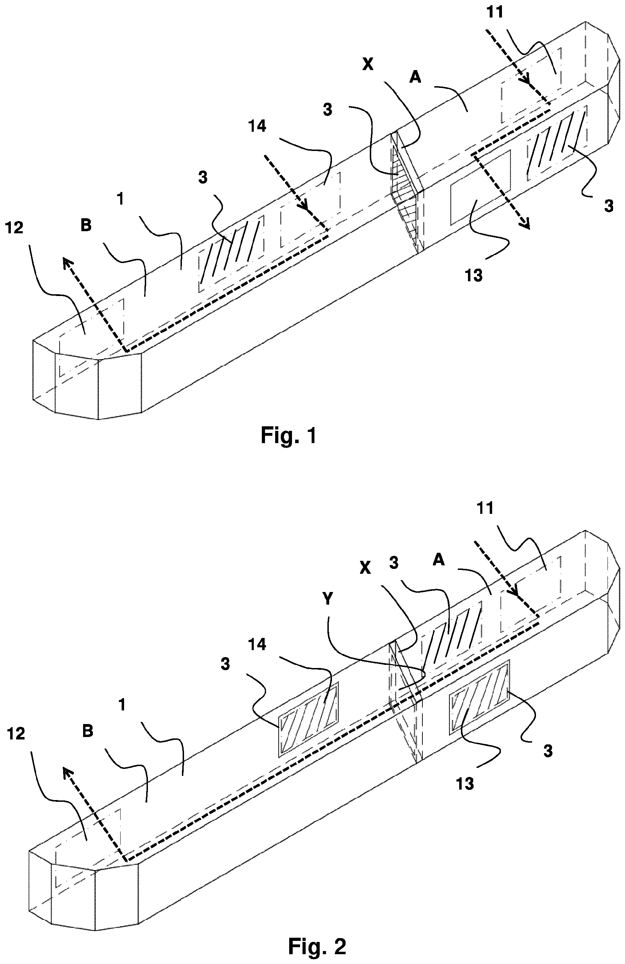

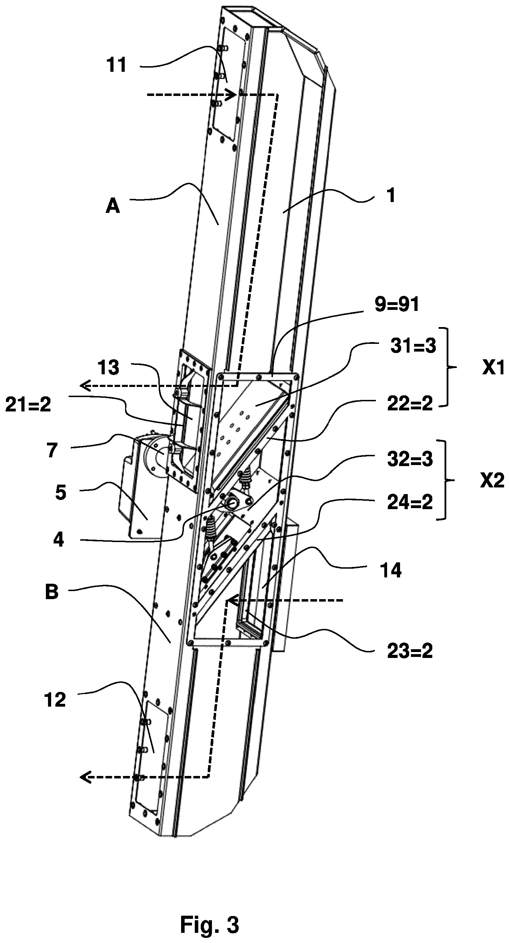

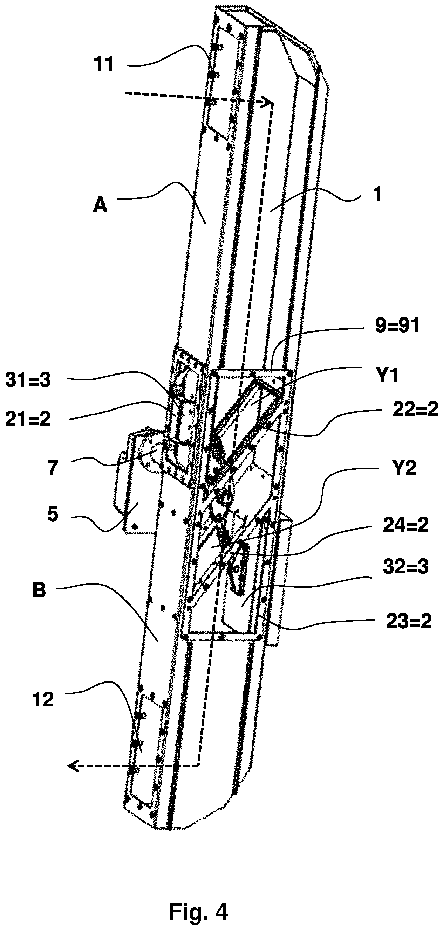

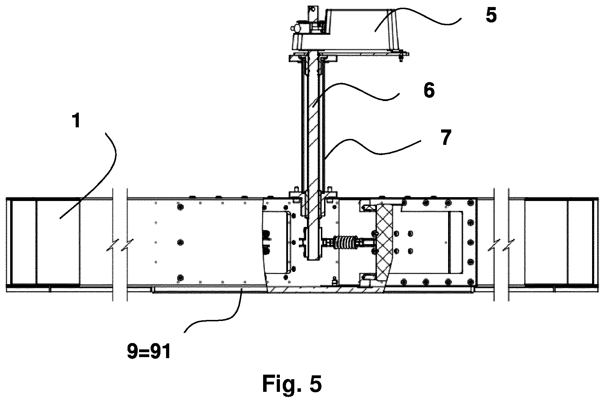

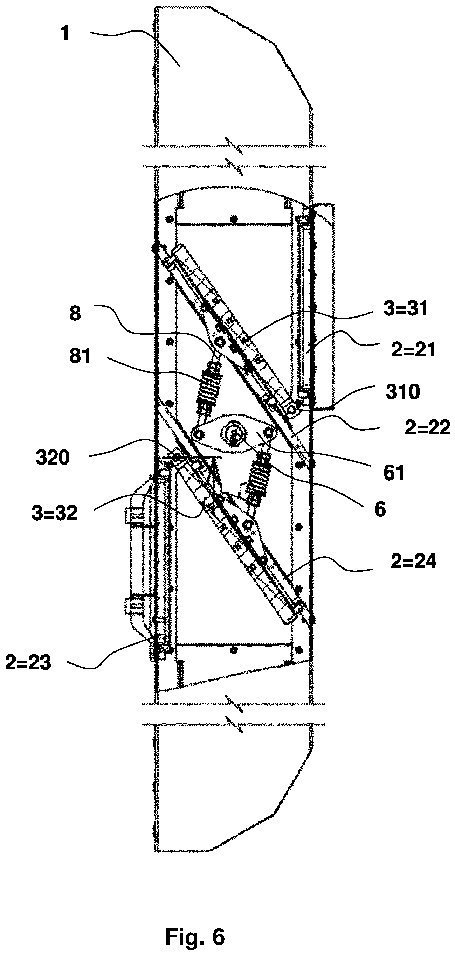

Exemplary embodiments of the valve are schematically represented in the enclosed drawings, Fig. 1 shows a diagram of the valve, not forming part of the claimed invention, with one separating partition in the operating mode, Fig. 2 shows a diagram of the valve of Fig. 1 in the overflow mode, Fig. 3 shows a valve according to the invention with two separating partitions in the operating mode, Fig. 4 shows the valve of Fig. 3 in the overflow mode, Fig. 5 shows the mounting of the valve drive and Fig. 6 represents a detail of an arrangement of the shut-off flaps.

### Examples of embodiment

The valve comprises a hollow body **1** having an inlet opening **11** for supplying air to the valve body **1** from an air cooling machine connectable to a respective pipeline of the cooling machine (not shown) and an outlet opening **12** for discharging air from the valve body **1** into the air cooling machine, which is connectable to the respective pipeline of the cooling machine.

Between these openings **11**, **12** in the cavity of the valve body **1** is arranged a closable separating partition **X**, which divides the cavity of the valve body **1** into an inlet portion **A** for air from the air cooling machine into the cooling chamber and an outlet part **B** of the air from the cooling chamber to the air cooling machine. The inlet portion **A** for air from the air cooling machine into the cooling chamber comprises the inlet opening **11** for supplying air from the air cooling machine into the cavity of the valve body **1** and a closable outlet opening **13** for discharging air from the cavity of the valve body **1** to the cooling chamber. The outlet portion **B** from the cooling chamber to the air cooling machine comprises a closable inlet opening **14** for supplying air from the cooling chamber into the cavity of the valve body **1** and an outlet opening **12** for discharging air from the cavity of the valve body **1** into the air cooling machine.

During operation, the separating partition **X** is closed so that air from the cooling machine enters the inlet portion **A** of the valve cavity and exits therefrom through the closable outlet opening **13** into the cooling chamber in which it is heated and cools the cooling chamber to the desired temperature. Via a dehumidifier (not shown), the air from the cooling chamber is discharged through the outlet portion **B** of the valve cavity, from which it exits through the outlet opening **12** into the air cooling machine. The air flow through the valve je is indicated in the drawings by arrows and dashed line for all variants.

As soon as the dehumidifier in the cooling chamber is clogged with snow and/or ice above the specified limit, it is necessary to start removing the snow and/or ice from the dehumidifier. For that purpose, it is necessary to ensure that the air from the air cooling machine does not pass through the cooling chamber, but returns to the air cooling machine after entering the cavity of the valve body **1**. This is achieved by closing the closable openings **13**, **14** and opening the separating partition **X**, thereby interconnecting the inlet portion **A** of the valve body **1** cavity and the outlet portion **B** of the cavity of the valve body **1** and the air from the air cooling machine enters the cavity of the valve body **1** through the inlet opening **11**, freely passes through the cavity of the valve body **1** and exits from the cavity of the valve body **1** through the outlet opening **12** back to the air cooling machine.

In the embodiment shown in Fig. 1 an 2, the separating partition **X** comprises an opening **Y**, which is associated with a shut-off flap **3**, which is rotatably mounted on the partition **X** and coupled to a drive not shown, which may be manual. Similarly, the shut-off flaps **3** are associated with closable openings **1****3**, **14**, which are rotatably mounted in the body **1** and coupled to a drive (not shown), which may also be manual. This above-described embodiment does not form part of the claimed invention and is presented for easier understanding of the construction and function of the valve.

In the particular embodiment shown in Figs. 3 and 4, two separating partitions **X1**, **X2** are formed in the hollow valve body **1**, in which closable openings **Y1**, **Y2** are provided, whereby the first partition **X1** defines an inlet portion **A** for air from the air cooling machine into the cooling chamber, and the second partition **X2** defines an outlet portion **B** for air from the cooling chamber into the air cooling machine.

Between the first closable opening **Y1** of the first separating partition **X1** and the outlet opening **13** from the cavity of the valve body **1** into the cooling chamber, a first shut-off flap **31** is displaceably mounted, whereby valve seats **21**, **22** are provided around the respective openings **Y1** and **13** for tight engagement of the shut-off flap **31**.

The first shut-off flap **31** is rotatably mounted by one of its edges in the body **1**, for example by means of an axis **310**, which is arranged in the body **1** such that during rotation of the flap **31** between the valve seat **21** of the opening **13** for discharging air from the valve body to the cooling chamber and the first valve seat **22** of the first closable opening **Y1** of the first separating partition **X1 X1**, the first shut-off flap **31** is capable of airtightly engaging the two valve seats **21**, **22** in the respective position.

Between the second closable opening **Y2** of the second separating partition **X2** and the inlet opening **14** for supplying air from the cooling chamber into the cavity of the valve body **1**, a second shut-off flap **32** is displaceably mounted, whereby valve seats **23**, **24** are provided around the respective openings **Y1** and **14** for tight engagement of the shut-off flap **32**.

The second shut-off flap **32** is rotatably mounted by one of its edges in the body **1**, for example by means of an axis **320**, which is mounted in the body **1** such that during the rotation of the flap **32** between the valve seat **23** of the opening **14** for supplying air from the cooling chamber and the second the valve seat **24** of the second closable opening **Y2** of the second separating partition **X2**, the second shut-off flap **32** is capable of airtightly engaging the two valve seats **23**, **24** in the respective position.

The shut-off flaps **31**, **32** are coupled to a drive **5**, in the embodiment shown, by means of tow bars **8** with equalizing springs **81**, whereby one end of the tow bars **8** is mounted on the respective flap **31**, **32** and the other end is mounted on a link **61**, which is fixedly mounted on a shaft **6** of the drive **5**, which is rotatable about the axis **4**.

A hollow web **7** is arranged around the shaft **6** between the body **1** and the drive **5**, the cavity of which is connected in an airtight manner to the interior of the body **1** and is sealed around the shaft **6** before the drive **5**.

An opening **91** is provided in the body **1** for mounting and/or dismounting the shut-off flaps **31**, **32** and their associated devices, the opening 91 being sealed airtight by a cover **9**.

The valve according to the invention is arranged in an unillustrated cooling chamber of an air cooling machine, where the respective pipes of the air cooling machine and the cooling chamber are connected to its openings **11**, **12**, **13** and **14** in a well-known manner.

During operation, the valve is open, as shown in Fig. 3. In this position, the openings **Y1**, **Y2** of the two separating partitions **X1**, **X2** are closed by the shut-off flaps **31**, **32**, and so the air from the air cooling machine enters the cavity of the valve body **1** through the inlet opening **11**, passes through the inlet portion **A** and exits through the outlet opening **13** to the cooling chamber, in which it is heated and cools the cooling chamber to the desired temperature. Via a dehumidifier (not shown), the air from the cooling chamber is supplied to the inlet opening **14** of the cavity of the valve body **1**, passes through the outlet portion **B** and exits through the outlet opening **12** into the air cooling machine. At the same time, the first shut-off flap **31** abuts on the first valve seat **22** of the first closable opening **Y1** of the first separating partition **X1** and the second shut-off flap **32** abuts on the second valve seat **24** of the second closable opening **Y2** of the second separating partition **X2**.

As soon as the dehumidifier is clogged with snow and/or ice above the specified limit, it is necessary to start removing the snow and/or ice from the dehumidifier. For that purpose, it is necessary to ensure that the air from the air cooling machine does not pass through the cooling chamber, but returns to the air cooling machine after entering the hollow valve body **1**.

Thus, the shaft **6** is rotated by the drive **5** and the shaft **6** by means of a link **61** and tow bars **8** with equalizing springs **81**, rotates the two shut-off flaps **31**, **32** in the direction away from their valve seats **22**, **24**, and ensures that they abut on the respective valve seats **21**, **23** for discharging air from the valve body **1** into the cooling chamber and to supply air from the cooling chamber via the dehumidifier into the valve body **1**. Thus, the air from the cooling machine freely passes through the hollow valve body **1**, entering through the opening **11** and exiting through the opening **12** back to the air cooling machine.

The shut-off flaps **31**, **32** are made a non-metallic material, which resists to low temperatures, such as fluoroplastics. The flaps **31**, **32** can be produced by die-casting or pressing, which reduces the cost of mechanical machining.

The equalizing springs **81** enable to regulate the force required for abutting on the respective valve seats **2** and at the same time compensate for the thermal deformation of the flaps **3**, **31**, **32** and the valve seats **2** due to temperature changes during valve operation.

The web **7** surrounding the shaft **6** of the drive **5** allows the drive to be lifted outside the cooling chamber to a space with positive temperatures, which brings savings since the sealing material is cheaper and allows the drive to be used at normal temperatures without the need for a special drive for low or extremely low temperatures.

### Industrial applicability

The invention can be used in air cooling machines.

### List of references

- 1: hollow valve body
- 11: inlet opening for supplying air from the air cooling machine
- 12: outlet opening for discharging air into the air cooling machine
- 13: closable outlet opening from the hollow valve body into the cooling chamber
- 14: closable inlet opening for supplying air from the cooling chamber into the hollow valve body
- 2: valve seats
- 21: valve seat of the opening for discharging air from the valve body into the cooling chamber
- 22: first valve seat of the opening of the first separating partition
- 23: valve seat of the opening for supplying air from the cooling chamber to the valve body
- 24: second valve seat of the opening of the second separating partition
- 3: shut-off flap
- 31: first shut-off flap
- 310: axis of the mounting of the first shut-off flap
- 32: second shut-off flap
- 320: axis of the mounting of second shut-off flap
- 4: axis of the drive shaft
- 5: drive
- 6: drive shaft
- 61: link
- 7: hollow web
- 8: tow bar
- 81: equalizing spring
- 9: cover
- 91: opening in the valve body for mounting and/or dismounting shut-off flaps
- A: inlet air portion
- B: outlet air portion
- X: separating partition
- X1: first separating partition
- X2: second separating partition
- Y: opening in the separating partition
- Y1: first closable opening of the first separating partition
- Y2: second closable opening of the second separating partition

## Claims

1. A valve for an air cooling machine, comprising a closed hollow body (1), which is divided by at least one closable separating partition (X) into an inlet portion (A) of the air from the air cooling machine to a cooling chamber, which comprises an inlet opening (11) for supplying air from the air cooling machine to the cavity of the valve body (1) and a closable outlet opening (13) for discharging from the cavity of the valve body (1) to the cooling chamber, and an outlet portion (B) of the air from the cooling chamber to the air cooling machine, which comprises a closable inlet opening (14) for supplying air from the cooling chamber to the valve body (1) and an outlet opening (12) for discharging air from the valve body (1) into the air cooling machine, whereby the hollow body (1) comprises two separating partitions (X1, X2) provided with closable openings (Y1, Y2), whereby the first partition (X1) defines an air inlet portion (A) from the air cooling machine to the cooling chamber and the second partition (X2) defines an air outlet portion (B) from the cooling chamber to the air cooling machine, whereby between the first closable opening (Y1) of the first partition (X1) and the outlet opening (13) from the cavity of the valve body (1) to the cooling chamber a first shut-off flap (31) is displaceably mounted and between the second closable opening (Y2) of the second partition (X2) and the inlet opening (14) for supplying air from the cooling chamber to the cavity of the valve body (1) a second shut-off flap (32) is displaceably mounted, whereby the first shut-off flap (31) and the second shut-off flap (32) are rotatably mounted in the valve body (1) and coupled to a drive (5) disposed therebetween, **characterized in that** the shut-off flaps (31, 32) are coupled to the drive (5) by means of tow bars (8) with equalizing springs (81), whereby one end of the tow bars (8) is mounted on the respective flap (31, 32) and the other end is mounted on a link (61) which is fixedly mounted on a shaft (6) of the drive (5), which is rotatable about the axis (4).

2. The valve according to claim 1, **characterized in that** the closable openings (Y, Y1, Y2, 13, 14) are provided with valve seats (21, 22, 23, 24), into which corresponding shut-off flaps (31, 32) tightly abut.

## Patentansprüche

1. Ventil für eine Luftkühlmaschine, das einen verschlossenen Hohlkörper (1) aufweist, der durch mindestens eine verschließbare Trennwand (X) auf einen Eintrittsteil (A) der Luft aus der Luftkühlmaschine in eine Kühlkammer, der eine Eintrittsöffnung (11) zur Luftzufuhr aus der Luftkühlmaschine in den Hohlraum des Ventilkörpers (1) und eine verschließbare Austrittsöffnung (13) zum Luftaustritt aus dem Hohlraum des Ventilkörpers (1) in die Kühlkammer aufweist, und einen Austrittsteil (B) der Luft aus der Kühlkammer in die Luftkühlmaschine aufgeteilt ist, der eine verschließbare Eintrittsöffnung (14) zur Luftzufuhr aus der Kühlkammer in den Ventilkörper (1) und eine Austrittsöffnung (12) zum Luftaustritt aus dem Ventilkörper (1) in die Luftkühlmaschine aufweist, wobei der Hohlkörper (1) zwei Trennwände (X1, X2) aufweist, die verschließbare Öffnungen (Y1, Y2) aufweisen, von denen die erste Trennwand (X1) den Eintrittsteil (A) der Luft aus der Luftkühlmaschine in die Kühlkammer und die zweite Trennwand (X2) den Austrittsteil (B) der Luft aus der Kühlkammer in die Luftkühlmaschine abgrenzen, wobei zwischen der ersten verschließbaren Öffnung (Y1) der ersten Trennwand (X1) und der Austrittsöffnung (13) aus dem Hohlraum des Ventilkörpers (1) in die Kühlkammer die erste Verschlussklappe (31) verstellbare gelagert ist und zwischen der zweiten verschließbaren Öffnung (Y2) der zweiten Trennwand (X2) und der Eintrittsöffnung (14) zur Luftzufuhr aus der Kühlkammer in den Hohlraum des Ventilkörpers (1) die zweite Verschlussklappe (32) verstellbar gelagert ist, wobei die erste Verschlussklappe (31) und die zweite Verschlussklappe (32) im Ventilkörper (1) drehbar gelagert sind und mit einem Antrieb (5) verkoppelt sind, der zwischen ihnen angeordnet ist, **dadurch gekennzeichnet, dass** die Verschlussklappen (31, 32) mit dem Antrieb (5) mit Hilfe der Zugstangen (8) mit Ausgleichsfedern (81) verkoppelt sind, wobei ein Ende der Zugstangen (8) auf der entsprechenden Klappe (31, 32) gelagert ist und das andere Ende auf einer Kulisse (61) gelagert ist, die auf der Welle (6) des Antriebs (5) fest gelagert ist, die um die Achse (4) herum drehbar ist.

2. Ventil nach dem Anspruch 1, **dadurch gekennzeichnet, dass** die verschließbaren Öffnungen (Y, Y1, Y2, 13, 14) die Ventilsitze (21, 22, 23, 24) aufweisen, in die die entsprechenden Verschlussklappen (31, 32) dicht aufsetzen.

## Revendications

1. Soupape pour machine de refroidissement à air comprenant un corps creux fermé (1) divisé en deux parties par au moins une barrière de séparation fermable (X) : la partie d'entrée (A) de l'air de la machine de refroidissement à air vers la chambre de refroidissement comprenant une ouverture d'entrée (11) pour l'arrivée de l'air de la machine de refroidissement à air vers la cavité du corps (1) de la soupape et une ouverture fermable de sortie (13) de l'air permettant l'évacuation de l'air de la cavité du corps (1) de la soupape vers la chambre de refroidissement, et la partie de sortie (B) de l'air de la chambre de refroidissement vers la machine de refroidissement à air comprenant une ouverture d'entrée fermable (14) pour l'arrivée de l'air de la chambre de refroidissement ver le corps (1) de la soupape et une ouverture de sortie (12) pour évacuation de l'air du corps (1) de la soupape vers la machine de refroidissement à air, tandis que le corps creux (1) comprend deux barrières de séparation (X1, X2) munies d'ouvertures fermables (Y1, Y2) dont la première barrière (X1) délimite la partie d'entrée (A) de l'air de la machine de refroidissement à air vers la chambre de refroidissement, et la deuxième barrière (X2) délimite la partie de sortie (B) de l'air de la chambre de refroidissement vers la machine de refroidissement à air, tandis que entre la première ouverture fermable (Y1) de la première barrière (X1) et l'ouverture de sortie (13) de la cavité du corps (1) de la soupape vers la chambre de refroidissement est disposé de manière ajustable le premier clapet d'obturation (31) et entre la deuxième ouverture fermable (Y2) de la deuxième barrière (X2) et l'ouverture d'entrée (14) pour l'arrivée de l'air de la chambre de refroidissement vers la cavité du corps (1) de la soupape est disposé de manière ajustable le deuxième clapet d'obturation (32), tandis que le premier clapet d'obturation (31) et le deuxième clapet d'obturation (32) sont disposés de manière rotative dans la corps (1) de la soupape et couplés à un actionneur (5) disposé entre eux, **caractérisée en ce que** les clapets d'obturation (31, 32) sont couplés à l'actionneur (5) à l'aide de barres de traction (8) avec ressorts de compensation (81), tandis que l'une des extrémités des barres de traction (8) est disposée sur le clapet correspondant (31, 32) et la deuxième extrémité est disposée sur une coulisse (61) qui est disposée de manière fixe sur l'arbre (6) de l'actionneur (5) qui peut tourner autour de l'axe (4).

2. Soupape selon la revendication 1, **caractérisée en ce que** les ouvertures fermables (Y, Y1, Y2, 13, 14) sont munies de sièges de soupape (21, 22, 23, 24) dans lesquels sont posés, sans jeu, les clapets d'obturation correspondants (31, 32).
